# EUROPÄISCHE PATENTANMELDUNG

(11) **EP 4 821 900 A1**
(43) Veröffentlichungstag der Anmeldung: **14.10.2026**
(21) Anmeldenummer: 25170074.6
(22) Anmeldetag: 11.04.2025
(51) Int. Cl.: C03C 3/095, C03C 3/097, C03C 4/20, C03C 10/00

(54) **TRANSPARENTE LITHIUMALUMINIUMSILIKAT-GLASKERAMIK**

(71) Anmelder: SCHOTT AG, 55122 Mainz (DE)
(72) Erfinder: REIFF, Lukas, 55122 Mainz (DE); IBE, Susanne, 55122 Mainz (DE); LANGER, Philipp, 55122 Mainz (DE)
(74) Vertreter: Schott Corporate IP

(57) **Zusammenfassung**

Die Erfindung betrifft eine transparente Lithiumaluminiumsilikat-Glaskeramik sowie die Verwendung einer transparenten Lithiumaluminiumsilikat-Glaskeramik.

## Beschreibung

### Gebiet der Erfindung

Die Erfindung betrifft eine transparente Lithiumaluminiumsilikat-Glaskeramik, welche insbesondere für die Verwendung als Sichtscheibe in Kaminöfen oder als Kochfläche in Kochgeräten geeignet ist, sowie deren Verwendung.

### Hintergrund der Erfindung

Glaskeramiken, insbesondere transparente Glaskeramiken sind seit vielen Jahren bekannt. Eine im Stand der Technik ebenfalls bekannte Variante einer solchen Glaskeramik stellen die Lithiumaluminiumsilikat (LAS)-Glaskeramiken dar, die entweder Hochquarz-Mischkristalle (HQMK) (auch als β-Eukryptit bekannt), insbesondere für transparente Materialien, oder Keatit-Mischkristalle (KMK) (auch als β-Spodumen bekannt), insbesondere für transluzente oder opake Materialien, als Hauptkristallphase enthalten. Zur Herstellung solcher Glaskeramiken werden zunächst in für die Glasherstellung üblichen Verfahren Ausgangsgläser, sogenannte Grüngläser, hergestellt. Diese Grüngläser werden durch eine thermische Behandlung, die Keramisierung, in Glaskeramiken umgewandelt. Auf diese Weise erzeugte transparente Glaskeramiken können in vielfältigen Bereichen Anwendung finden. Insbesondere werden solche Glaskeramiken als Kochflächen verwendet. Ferner finden derartige Glaskeramiken Verwendung als Sichtscheibe für Kaminöfen, Backöfen, als Arbeitsplatte oder als Sicherheitsglas.

Die für die Verwendung als Kaminsichtscheibe wesentliche Eigenschaft dieser Materialien ist, dass sie über eine sehr geringe thermische Ausdehnung in einem Temperaturbereich von Raumtemperatur bis 700 °C verfügen. Die niedrige thermische Ausdehnung bewirkt ihrerseits eine hohe Temperaturwechselbeständigkeit. Die thermische Ausdehnung wird durch die Kombination von Kristallphasen mit negativer thermischer Ausdehnung und einer amorphen Restglasphase mit positiver thermischer Ausdehnung eingestellt.

Aufgrund steigender Rohstoffpreise für Lithium ist es aus wirtschaftlichen Gründen vorteilhaft, den Anteil an Lithium in der Glaskeramik zu minimieren. Da Lithium aber eine der drei Hauptbestandteile in Lithiumaluminiumsilikat-Glaskeramiken ist, kann es nicht ohne Weiteres beliebig reduziert werden. Der Anteil an Li₂O wirkt sich unmittelbar auf zentrale Eigenschaften der Glaskeramik wie beispielsweise die für die Herstellbarkeit wichtige Viskosität in der Schmelze und in der Heißformgebung oder auf die für die Verwendung als Kochfläche wichtige thermische Ausdehnung aus.

Die Preisentwicklung für Lithium ist kein neues Problem. In den vergangenen 20 Jahren hat sich der Preis für Lithium kontinuierlich erhöht. Trotz dieses seit langem bestehendem Bedürfnis weisen die meisten am Markt erhältlichen Glaskeramiken für Kochflächen ca. 3,8 oder mehr Gew.-% Li₂O auf.

Glaskeramiken mit einem geringeren Li₂O-Anteil, beispielsweise einem Anteil von weniger als 3,5 Gew.-%, sind aus folgenden Dokumenten bekannt: WO 2012/010341 A1, EP 3502069 A1, US 2017050880 A, US 2020189965 A, US 2020140322 A, US 2021387899 A, WO 2021/224412 A1, EP 4 455 103 A1, WO 2024/157957 A1. Diese Glaskeramiken weisen jedoch verschiedene Nachteile auf, beispielsweise eine reduzierte Temperaturwechselbeständigkeit oder eine schlechte Schmelzbarkeit des Grünglases.

Grundsätzliche Ansätze, mit denen Lithiumaluminiumsilikat-Glaskeramiken erzeugt werden können, die trotz eines geringen Gehaltes an Li₂O die oben genannten Nachteile vermeiden, wurden durch die Anmelderin beispielsweise in der DE 20 2022 106 826 U1 beschrieben. Dabei werden auch Ansätze beschrieben, wie eine transparente Glaskeramik mit geringem Gehalt an Li₂O erzeugt werden kann.

Unter einer transparenten Glaskeramik wird vorliegend wie üblich eine Glaskeramik mit geringer Lichtstreuung verstanden. Die Transmission einer solchen transparenten Glaskeramik kann über absorbierende, also färbende, Bestandteile in einem weiten Bereich eingestellt werden.

Ein Maß für die Transparenz ist der Lichttransmissionsgrad τᵥᵢₛ.

Für transparente Glaskeramiken ergeben sich neben der zuvor beschriebenen Temperaturstabilität weitere besondere Anforderungen. Wird die transparente Glaskeramik nicht als Kaminsichtscheibe, sondern als Kochfläche verwendet, wird die Glaskeramikscheibe üblicherweise mit einer farbigen Unterseitenbeschichtung versehen, so dass unter der Glaskeramik angeordnete Heizelemente und die zugehörige Elektronik von oberhalb der Glaskeramik nicht mehr sichtbar sind. Dabei besteht im Allgemeinen die Anforderung, dass die Farbwahrnehmung einer solchen Unterseitenbeschichtung durch einen Endnutzer durch die Glaskeramik nicht verfälscht wird. Ähnliche Anforderungen an die Glaskeramik ergeben sich auch bei Verwendung einer transparenten Glaskeramik als Sichtscheibe beispielsweise eines Kaminofens, da auch in diesem Fall eine Farbverfälschung bei Durchsicht durch die Sichtscheibe vermieden werden muss.

Neben einer hohen Transmission ist also auch eine große Farbneutralität, d.h. eine geringe Buntheit, angegeben als C*, gefordert.

Auch EP 4 495 076 A1 und EP 4 495 077 A1 beschreiben schon LAS-Glaskeramiken mit einem geringen Gehalt an Li₂O. Die Li₂O-Reduktion stößt dabei u.a. deswegen an ihre Grenze, weil sie zu einer Erhöhung des C*-Wertes führt.

### Aufgabe der Erfindung

Die Aufgabe der Erfindung besteht in der Bereitstellung einer transparenten Lithiumaluminiumsilikat-Glaskeramik, welche kostengünstig ist, ohne dass dadurch Einschränkungen in den Gebrauchseigenschaften entstehen. Ferner soll die erfindungsgemäße Glaskeramik eine möglichst geringe Verfälschung einer Farbwahrnehmung durch die Glaskeramik aufweisen.

Die Glaskeramik soll insbesondere allen Anforderungen für den Gebrauch als Kaminsichtscheibe geeignet sein. Sie soll aber auch den Anforderungen für den Gebrauch als Kochfläche mit allen Arten von Heizelementen genügen. Dazu zählen insbesondere Strahlungs-, Induktions- und Gasheizelemente. Beides erfordert insbesondere eine ausreichend hohe Temperaturwechselbeständigkeit als auch eine hohe Temperatur-Langzeitbeständigkeit.

### Zusammenfassung der Erfindung

Die Aufgabe der Erfindung wird gelöst durch den Gegenstand der unabhängigen Ansprüche. Bevorzugte Ausführungen und Weiterbildungen finden sich in den abhängigen Ansprüchen.

Die erfindungsgemäße transparente Lithiumaluminiumsilikat-Glaskeramik weist einen thermischen Ausdehnungskoeffizienten im Bereich von 20 °C bis 700 °C, CTE(20;700°C), von -0,8 bis 1,5 ppm/K, eine Buntheit C* von weniger als 5, bevorzugt von weniger als 4,5, bevorzugt von weniger als 4,2, besonders bevorzugt von weniger als 3,2, bezogen auf eine Dicke von 4 mm auf. Sie weist eine Hochquarz-Mischkristallphase auf.

Die Glaskeramik enthält dabei in Gew.-% auf Oxidbasis die folgenden Bestandteile in den angegebenen Mengen:

| | |
|---|---|
| SiO₂ | 62 - 70 |
| Al₂O₃ | 19 - 24 |
| Li₂O | 1,9 - < 3,0 |
| Na₂O | 0 - 1 |
| K₂O | 0 - 1 |
| ZnO | 0 - 5 |
| MgO | 0 - < 1,5 |
| CaO | 0 - 1,5 |
| BaO | 0 - 5 |
| TiO₂ | 1,5 - 3,5 |
| ZrO₂ | 1,0 - 2,5 |
| SnO₂ | 0 - 0,15 |
| As₂O₃ und/oder Sb₂O₃ | 0,1 - 1,5. |

Dabei ist die Glaskeramik bis frei von Cr₂O₃, V₂O₅, MnO₂ und MoOs.

Unter "frei von Cr₂O₃" wird in dieser Offenbarung verstanden, dass die Glaskeramik kein oder maximal 6 ppm Cr₂O₃ enthält.

Unter "frei von V₂O₅" wird in dieser Offenbarung verstanden, dass die Glaskeramik kein oder maximal 12 ppm V₂O₅ enthält.

Unter "frei von MnO₂" wird in dieser Offenbarung verstanden, dass die Glaskeramik kein oder maximal 60 ppm MnO₂ enthält.

Unter "frei von MoO₃" wird in dieser Offenbarung verstanden, dass die Glaskeramik kein oder maximal 12 ppm MoO₃ enthält.

Eine Glaskeramik mit einem entsprechenden thermischen Ausdehnungskoeffizienten weist sowohl eine hohe Temperaturwechselbeständigkeit als auch eine hohe thermische Langzeitstabilität auf. Dadurch ist sie für die Verwendung als Kochfläche mit allen Arten von Heizelementen geeignet. Der Ausdehnungskoeffizient CTE(20;700°C) beträgt wenigstens -0,8 ppm/K. Dabei bedeutet "ppm" "parts per million", also eine relative Größenänderung von 10⁻⁶ bei einer Temperaturänderung von 1 K. Negativere Werte der thermischen Ausdehnung werden vermieden. Bei einer negativen Ausdehnung, also einer Kontraktion, entstehen beim Aufheizen Zugspannungen in der Oberfläche der Glaskeramik. Bei einem Wert von weniger als -0,8 ppm/K können diese Spannungen bei typischen Betriebstemperaturen von Kochgeräten die mechanische Festigkeit der Kochfläche reduzieren. Eine thermische Ausdehnung CTE(20;700°C) von mehr als 1,5 ppm/K wird ebenfalls vermieden. Bei einer Ausdehnung von mehr als 1,5 ppm/K ist nicht sichergestellt, dass die Temperaturwechselbeständigkeit ausreichend hoch ist, um die Glaskeramik in Kochgeräten mit Strahlungsheizelementen einsetzen zu können.

In einer Weiterbildung der Erfindung beträgt der thermische Ausdehnungskoeffizient CTE(20;700°C) mindestens -0,6 ppm/K, -0,4 ppm/K, -0,2 ppm/K, 0,0 ppm/K, 0,2 ppm/K, 0,4 ppm/K, 0,6 ppm/K oder sogar 0,8 ppm/K. Außerdem beträgt der thermische Ausdehnungskoeffizient vorzugsweise maximal 1,4 ppm/K, 1,3 ppm/K, 1,2 ppm/K, 1,1 ppm/K, 1,0 ppm/K, 0,8 ppm/K oder sogar nur maximal 0,6 ppm/K.

In einer bevorzugten Ausführungsform der Erfindung beträgt der thermische Ausdehnungskoeffizient CTE(20;700°C) der Glaskeramik -0,8 bis 0,8 ppm/K, vorzugsweise -0,5 bis 0,65 ppm/K, besonders bevorzugt -0,3 bis 0,65 ppm/K, ganz besonders bevorzugt 0,0 bis 0,65 ppm/K oder 0,0 bis 0,5 ppm/K, insbesondere > 0,0 bis 0,65 ppm/K oder > 0,0 bis 0,5 ppm/K. Solche Glaskeramiken sind besonders für Kochflächen in Kochgeräten mit Strahlungsheizelementen oder Induktionsheizelementen geeignet.

Bezüglich der angegebenen optischen Eigenschaften hinsichtlich der Transmission und der Buntheit der erfindungsgemäßen Glaskeramik bedeutet "bezogen auf eine Dicke von 4 mm", dass die entsprechenden Eigenschaften entweder an einer Probe mit einer Materialstärke von 4 mm bestimmt werden oder bei einer anderen Materialstärke bestimmt und auf eine Materialstärke von 4 mm umgerechnet werden.

Die Buntheit C* wird gemäß der Formel $C * = \sqrt{{\left(a*\right)}^{2} + {\left(b*\right)}^{2}}$ aus den L*a*b*-Farbkoordinaten bestimmt.

Die Farbkoordinaten a* und b* werden in bekannter Weise aus dem Transmissionsspektrum der Glaskeramik unter Verwendung von Normlicht der Normlichtart D65 und einem 2°-Beobachter bestimmt.

Die Buntheit C* von weniger als 5, bevorzugt von weniger als 4,5, bewirkt, dass die Farbe von Licht bei Durchtritt durch die Glaskeramik nur sehr geringfügig verändert wird. Dies ist beispielsweise bei der Verwendung als Kaminsichtscheibe oder Kochfläche von besonderer Bedeutung.

Die Buntheit einer Glaskeramik macht sich beispielsweise dann besonders bemerkbar, wenn die Glaskeramik zur Verwendung als Kochfläche mit einer weißen oder allgemein hellen Unterseitenbeschichtung versehen wird. Glaskeramiken in diesen Verwendungen sind häufig ca. 4 mm dick. Licht, dass an einer rückseitigen Beschichtung reflektiert wird, durchläuft demnach eine optische Wegstrecke von ca. 8 mm, so dass sich Farbverschiebungen durch eine Eigenfarbe der Glaskeramik stärker auswirken als bei kürzeren Wegstrecken. Für eine Kochfläche mit einer weißen Beschichtung auf der Rückseite ist eine entsprechend geringe Buntheit deshalb besonders vorteilhaft. Auch für eine Kaminsichtscheibe ist es vorteilhaft, wenn sie farbneutral ist. Der ästhetische Eindruck der Scheibe an sich ist verbessert. Und bei Betrieb des Kamins wird die Flammenfarbe nicht verfälscht.

Bevorzugt weist die erfindungsgemäße Glaskeramik daher eine Buntheit C* von weniger als 4,2, besonders bevorzugt von höchstens 3,5, ganz besonders bevorzugt von weniger als 3,2, auf.

Die erfindungsgemäße Glaskeramik weist dabei vorzugsweise eine Kristallitgröße in der Hochquarz-Mischkristallphase von weniger als 80 nm, bevorzugt weniger als 70 nm, besonders bevorzugt weniger als 60 nm und ganz besonders bevorzugt weniger als 50 nm auf. Die Kristallitgröße hat dabei direkten Einfluss auf die optischen Eigenschaften der Glaskeramik. So führt eine zu große Kristallitgröße zu einer verstärkten Lichtstreuung in der Glaskeramik, die sich als Trübung der Glaskeramik zeigt.

Die erfindungsgemäße LAS-Glaskeramik enthält die folgenden Bestandteile in Gew.-%:

| | |
|---|---|
| SiO₂ | 62 - 70, |
| Al₂O₃ | 19 - 24 und |
| Li₂O | 1,9 - < 3,0. |

Die Komponenten SiO₂ und Al₂O₃ bilden in der Glaskeramik zusammen mit Li₂O die Hauptbestandteile der Kristallphase. Zugleich bestimmen sie wesentlich die Glasbildungseigenschaften sowie die Viskosität des Grünglases.

Der SiO₂-Gehalt der erfindungsgemäßen Glaskeramik soll maximal 70 Gew.-% betragen, weil diese Komponente die Viskosität des Glases, insbesondere den Verarbeitungspunkt V_{A}, stark erhöht. Für gutes Einschmelzen der Gläser und für niedrige Formgebungstemperaturen sind höhere Gehalte von SiO₂ unwirtschaftlich. Bei sehr hohen SiO₂-Anteilen von mehr als 70 Gew.-% kann es bei der Keramisierung zur Bildung der Kristallphase Keatit kommen. Dies führt zu einer starken Erhöhung der thermischen Ausdehnung und zu einer Verschlechterung der optischen Eigenschaften des Materials, insbesondere in Form einer Trübung. Der Mindestgehalt an SiO₂ soll dabei 62 Gew.-% betragen, weil dies für die geforderten Eigenschaften, wie z. B. Temperaturbelastbarkeit, vorteilhaft ist.

Vorzugsweise enthält die Glaskeramik wenigstens 63 Gew.-% SiO₂. Je mehr SiO₂ die Glaskeramik enthält, desto besser ist ihre Temperaturbelastbarkeit. Weiterhin enthält sie vorzugsweise höchstens 69 Gew.-%, höchstens 68 Gew.-%, höchstens 67 Gew.-% oder sogar nur höchstens 66 Gew.-% SiO₂. Je weniger SiO₂ die Glaskeramik enthält, desto besser ist die Schmelzbarkeit und Verarbeitbarkeit des Grünglases in der Heißformgebung.

Der Gehalt an Al₂O₃ der erfindungsgemäßen Glaskeramik liegt im Bereich von 19 bis 24 Gew.-%. Ein höherer Al₂O₃-Anteil führt zu Problemen mit der Entglasung und der unerwünschten Bildung von Mullit. Deshalb sollen 24 Gew.-% nicht überschritten werden. Geringere Mengen als 19 Gew.-% an Al₂O₃ sind ungünstig für die Bildung der Hochquarz-Mischkristalle und fördern die Bildung unerwünschter Kristallphasen. Zudem hat sich gezeigt, dass sich geringe Gehalte an Al₂O₃ nachteilig auf die Buntheit der Glaskeramik auswirken. Je mehr Al₂O₃ die Glaskeramik enthält, desto besser ist ihre Temperaturbelastbarkeit. Je weniger Al₂O₃ die Glaskeramik enthält, desto besser ist die Schmelzbarkeit und Verarbeitbarkeit des Grünglases in der Heißformgebung. So enthält sie vorzugsweise höchstens 23 Gew.-%, vorzugsweise höchstens 22 Gew.-% Al₂O₃.

Der Gehalt an Li₂O der erfindungsgemäßen Glaskeramik liegt im Bereich 1,9 - < 3,0 Gew.-%. Es hat sich gezeigt, dass selbst mit einem solch niedrigen Li₂O-Gehalt in Kombination mit den übrigen Bestandteilen in den genannten Grenzen eine Glaskeramik mit einer hohen Temperaturwechselbeständigkeit und einer guten Schmelzbarkeit und damit Herstellbarkeit erzielt werden kann. Der elektrische Widerstand der Glasschmelze ist ausreichend reduziert, die Viskosität ist ausreichend reduziert und dadurch auch der Verarbeitungspunkt V_{A} ausreichend abgesenkt. Durch eine reduzierte Viskosität der Glasschmelze kann auch die Effizienz der Läuterung verbessert werden. Eine verbesserte Läuterung führt zu weniger Produktionsausschuss aufgrund von Blasenbildung im Grünglas. Ferner reduziert Li₂O auch die Tendenz des Grünglases zur Entglasung.

In einer bevorzugten Ausführungsform enthält die Glaskeramik wenigstens 2,0 Gew.-% Li₂O. In einer bevorzugten Ausführungsform enthält die Glaskeramik höchstens 2,8 Gew.-% Li₂O.

Als Quelle für Lithium zur Herstellung von Glaskeramik werden in der Regel natürliche Mineral-Rohstoffe wie Spodumen oder Petalit verwendet oder alternativ synthetisch hergestelltes Li₂CO₃.

In einer bevorzugten Ausführungsform enthält die eine Hochquarz-Mischkristallphase aufweisende Glaskeramik die Hochquarz-Mischkristalle als Hauptkristallphase. "Hauptkristallphase" bedeutet, dass in der Glaskeramik der Volumenanteil von Hochquarz-Mischkristall höher als der von Keatit-Mischkristall und höher als der von jeder anderen vorhandenen Kristallphasen ist. In einer besonders bevorzugten Ausführungsform ist der Volumenanteil an Hochquarz-Mischkristall höher als der der Summe aller anderen vorhandenen Kristallphasen.

Die Volumenanteile werden mittels Rietveld-Analyse aus Röntgenbeugungsspektren bestimmt.

Neben den zuvor genannten Mengen an SiO₂, Al₂O₃ und Li₂O enthält die erfindungsgemäße Glaskeramik 0 - 1 Gew.-% Na₂O. Ein Gehalt an Na₂O von bis zu 1 Gew.-% kann in der erfindungsgemäßen Glaskeramik die Schmelzbarkeit und das Entglasungsverhalten bei der Formgebung des Glases verbessern. Ferner kann Na₂O die elektrische Leitfähigkeit der Schmelze erhöhen. Dies erleichtert die Einkopplung von Energie durch elektrische Heizungen in der Schmelzwanne. Die Gehalte werden jedoch begrenzt, weil es nicht in die Kristallphasen eingebaut wird, sondern im Wesentlichen in der Restglasphase der Glaskeramik verbleibt und sich dort ungünstig auf den gewünschten CTE der Glaskeramik auswirkt. Zu hohe Gehalte beeinträchtigen das Kristallisationsverhalten bei der Umwandlung des kristallisierbaren Ausgangsglases in die Glaskeramik, hier insbesondere zu Lasten hoher Keramisierungsgeschwindigkeiten. Eine Folge hiervon können erhöhte Kristallitgrößen bei bevorzugter schneller Keramisierung in der Glaskeramik sein, die sich wiederum ungünstig auf das Streuverhalten der Glaskeramik auswirken. Außerdem wirken sich höhere Gehalte ungünstig auf die Zeit-/Temperaturbelastbarkeit der Glaskeramik aus. Deshalb enthält die Glaskeramik vorzugsweise > 0,1 - 1 Gew.-% oder 0,2 - 0,8 Gew.-% oder sogar 0,25 - 0,45 Gew.-% Na₂O.

Weiter enthält die Glaskeramik 0 - 1 Gew.-% K₂O. Ein Gehalt an K₂O von bis zu 1 Gew.-% kann in der Glaskeramik die Schmelzbarkeit und das Entglasungsverhalten bei der Formgebung des Glases verbessern. K₂O kann ebenfalls zusätzlich die elektrische Leitfähigkeit der Schmelze erhöhen. Dies erleichtert die Einkopplung von Energie durch elektrische Heizungen in der Schmelzwanne. Es ist bevorzugt, wenn K₂O in Mengen von höchstens 0,8 Gew.-%, 0,6 Gew.-%, 0,5 Gew.-%, 0,4 Gew.-%, oder sogar 0,3 Gew.-% in der Glaskeramik enthalten ist. Die Gehalte werden begrenzt, weil K₂O nicht in die Kristallphasen eingebaut wird, sondern im Wesentlichen in der Restglasphase der Glaskeramik verbleibt und sich dort ungünstig auf den gewünschten CTE der Glaskeramik auswirkt. Zu hohe Gehalte beeinträchtigen das Kristallisationsverhalten bei der Umwandlung des kristallisierbaren Ausgangsglases in die Glaskeramik, hier insbesondere zu Lasten schneller Keramisierungsgeschwindigkeiten. Analog zu den vorstehenden Ausführungen bzgl. Na₂O wirkt sich auch hier eine zu hohe Keramisierungsgeschwindigkeit und mithin eine erhöhte Kristallitgröße in der Glaskeramik nachteilig auf das Streuverhalten der Glaskeramik aus. Außerdem wirken sich höhere Gehalte ungünstig auf die Zeit-/Temperaturbelastbarkeit der Glaskeramik aus.

Die erfindungsgemäße Glaskeramik enthält ferner 0 - 5 Gew.-% ZnO, bevorzugt 1,2 - 4,0 Gew.-% ZnO, bevorzugt 2,0 - 3,6 Gew.-%. ZnO trägt, ähnlich wie Li₂O, zur Reduzierung des thermischen Ausdehnungskoeffizienten bei. Ferner reduziert ZnO den Verarbeitungspunkt V_{A} und die obere Entglasungstemperatur OEG der Glaskeramik. Es hat sich allerdings gezeigt, dass ein zu hoher Gehalt an ZnO zu einem erhöhten Brechwertunterschied zwischen Kristall- und Restglasphase in der Glaskeramik führt, so dass eine entsprechende Glaskeramik einfallendes Licht verstärkt streut. Folglich kann ein zu hoher Gehalt an ZnO die Transmission und die Buntheit einer Glaskeramik negativ beeinflussen.

Neben den zuvor genannten Komponenten enthält die erfindungsgemäße Glaskeramik ferner 1,5 - 3,5 Gew.-% TiO₂. TiO₂ trägt zusammen mit ZrO₂ maßgeblich zur Keimbildung bei. Die Menge an TiO₂ wird dabei auf Werte von höchstens 3,5 Gew.-%, bevorzugt höchstens 3,0 Gew.-%, besonders bevorzugt höchstens 2,5 Gew.-%, ganz besonders bevorzugt höchstens 2,4 Gew.-% begrenzt. TiO₂ kann in größeren Mengen zu einer Entglasung bei der Heißformgebung führen. Zusätzlich kann es zu einer unerwünschten Erhöhung des Brechungsindexes der Restglasphase führen. Die Glaskeramik enthält wenigstens 1,5 Gew.-%, bevorzugt wenigstens 1,6 Gew.-%, wenigstens 1,7 Gew.-%, wenigstens 1,8 Gew.-%, wenigstens 1,9 Gew.-%, wenigstens 2,0 Gew.-% oder sogar wenigstens 2,1 Gew.-% TiO₂. Je höher die Anteile an TiO₂ sind, desto schneller läuft die Keimbildung ab. Dadurch kann die Keramisierungszeit der Glaskeramik reduziert werden. Je niedriger die Anteile an TiO₂ sind, desto stärker wird der Keramisierungsprozess stabilisiert und einer unbeabsichtigten Entglasung während der Heißformgebung des Grünglases vorgebeugt. Zusammenfassend ist der Gehalt an TiO₂ nach oben begrenzt, um die färbende Wirkung von TiO₂ für die optischen Eigenschaften der Glaskeramik so gering wie möglich zu halten. Gleichzeitig sollte der Gehalt an TiO₂ jedoch auch nicht zu gering gewählt werden, so dass weiterhin eine hinreichende Keimbildung und kurze Keramisierungszeiten gewährleistet sind. Daher ist ein Gehalt von 2,2 ± 0,1 Gew.-% TiO₂ ganz besonders bevorzugt.

Des Weiteren enthält die erfindungsgemäße Glaskeramik 1,0 - 2,5 Gew.-% ZrO₂, bevorzugt wenigstens 1,5 Gew.-%. ZrO₂ fungiert in der Glaskeramik unter anderem als Keimbildner und kann als solcher mit weiteren Bestandteilen einer Glaskeramik, wie z.B. TiO₂, zusammenwirken. Ein Gehalt von wenigstens 1,5 Gew.-% oder gar mehr als 1,5 Gew.-% ZrO₂ ist dabei vorteilhaft, um die Keimbildung zu verbessern. Gleichzeitig ist es vorteilhaft, den Gehalt an ZrO₂ auf 2,5 Gew.-% zu begrenzen, da ZrO₂ das Einschmelzverhalten des Gemenges verschlechtert. Zusätzlich kann ZrO₂ zur Entglasung bei der Heißformgebung führen. Dabei kann es zur unerwünschten Bildung von Zr-haltigen Kristallphasen, beispielsweise Baddeleyit kommen. Vorzugsweise enthält die Glaskeramik >1,6 Gew.-%, besonders bevorzugt >1,7 Gew.-% ZrO₂, ganz besonders bevorzugt wenigstens 1,8 Gew.-%. Weiter enthält sie vorzugsweise höchstens 2,4 Gew.-%, 2,3 Gew.-%, 2,2 Gew.-%, 2,1 Gew.-%, 2,0 Gew.-% oder sogar nur höchstens 1,9 Gew.-% ZrO₂. In diesen Mengen lässt sich ein besonders guter Kompromiss aus positivem Beitrag zur Keimbildung bei noch akzeptabler Verschlechterung von Schmelzbarkeit und Heißformgebung erzielen. Durch eine Optimierung des Gehalts an ZrO₂, insbesondere im Hinblick auf den Gehalt der Glaskeramik an TiO₂, kann dabei ferner eine schnellere Keramisierung des Grünglases ermöglicht werden. Eine schnellere Keramisierung bei vorhergehender ausreichender Keimbildung führt zu einer geringeren Kristallitgröße in der Glaskeramik und mithin zu einer geringeren Streuung von Licht. Des Weiteren kann durch den Einsatz von ZrO₂ der Anteil TiO₂ als weiterer Keimbildner reduziert und somit eine Glaskeramik mit reduzierter Buntheit hergestellt werden. Übliche Rohstoffe für ZrO₂ wie beispielsweise Zirkon enthalten bis zu 2 % HfO₂ als Verunreinigung. Daher enthalten die ZrO₂-haltigen Gläser üblicherweise ebenfalls entsprechende Anteile an HfO₂ als Verunreinigung. Vorzugsweise wird dem Gemenge kein HfO₂ separat zugegeben.

Die Glaskeramik enthält wenigstens 0,1 Gew.-% und bis zu 1,5 Gew.-% As₂O₃ und/oder Sb₂O₃. Gegenüber SnO₂ haben beide Komponenten den Vorteil, dass sie praktisch keine negative Wirkung auf die optischen Eigenschaften der Glaskeramik haben. "As₂O₃ und/oder Sb₂O₃" meint hier und im Folgenden, dass diese beiden Bestandteile jeweils einzeln oder auch gleichzeitig in der Glaskeramik enthalten sein können, wobei beide Komponenten einzeln einen Anteil von bis zu 1,5 Gew.-% ausmachen können, bei Vorhandensein beider Komponenten jedoch ihre Summe 1,5 Gew.-% nicht überschreitet. Bevorzugt ist ein Gehalt von höchstens 1,2 Gew.-% oder höchstens 1,0 Gew.-% oder höchstens 0,9 Gew.-% an As₂O₃ und/oder Sb₂O₃, vorzugsweise von nur höchstens 0,82 Gew.-% an As₂O₃ und/oder Sb₂O₃, besonders bevorzugt von höchstens 0,80 Gew.-% an As₂O₃ und/oder Sb₂O₃. Schon aus Gründen des Umweltschutzes werden die Anteile möglichst gering gehalten. Bevorzugt ist ein Gehalt von wenigstens 0,5 Gew.-% As₂O₃ und/oder Sb₂O₃. Dadurch wird eine effektive Läuterung ermöglicht. Es ist bevorzugt, dass mehr As₂O₃ als Sb₂O₃, beide in Gew.-%, vorhanden ist. Es ist besonders bevorzugt, dass die Gesamtmenge an As₂O₃ und Sb₂O₃ vollständig durch As₂O₃ realisiert wird. In diesen Fällen ist die Glaskeramik frei von Sb₂O₃. Unter "frei von Sb₂O₃" wird dabei verstanden, dass die Glaskeramik kein oder maximal 600 ppm, bevorzugt maximal 240 ppm, Sb₂O₃ enthält.

As₂O₃ hat sich nämlich gegenüber Sb₂O₃ als wirksamer läuternd und als weniger den Farbeindruck der Glaskeramik beeinträchtigend herausgestellt. Besonders bevorzugt ist ein Gehalt an As₂O₃ von 0,5 Gew.-% bis 0,82 Gew.-%.

Zur Unterstützung der Läuterung des Grünglases kann dabei zusätzlich zu dem oben genannten Gehalt an As₂O₃ und/oder Sb₂O₃, vorzugsweise an As₂O₃, ein Anteil von bis zu 0,15 Gew.-% SnO₂ in der Zusammensetzung enthalten sein. SnO₂ unterstützt die Läuterung des Grünglases. Eine Glaskeramik mit den vorstehend genannten Mengen an SnO₂ kann sich daher durch besonders wenige Defekte aufgrund von eingeschlossenen Gasblasen auszeichnen. SnO₂ kann ferner in Kombination mit den anderen Bestandteilen der erfindungsgemäßen Glaskeramik vorteilhaft sein, um die Keimbildung zu unterstützen.

Die Menge von 0,15 Gew.-% soll aber nicht überschritten werden, da SnO₂ sich negativ auf die optischen Eigenschaften der Glaskeramik auswirkt und insbesondere eine Erhöhung der Buntheit der Glaskeramik bewirken kann. Dies liegt unter anderem daran, dass SnO₂ mit TiO₂ eine zusätzliche Absorptionsbande für einfallendes Licht ausbilden kann, wodurch es zu einer Rotverschiebung des transmittierten Lichts kommt. Höhere Gehalte an SnO₂ führen zudem zur unerwünschten Kristallisation von Sn-haltigen Kristallphasen, beispielsweise Kassiterit, an den Kontaktmaterialien (z. B. Pt/Rh) bei der Formgebung, und diese führt zu einer weiteren Verschlechterung der optischen Eigenschaften der Glaskeramik. Daher ist es für die optischen Eigenschaften der Glaskeramik besonders vorteilhaft, den Gehalt an SnO₂ so weit wie möglich zu begrenzen.

Nach einer weiteren Ausführungsform ist daher vorgesehen, dass die transparente Lithiumaluminiumsilikat-Glaskeramik höchstens 0,1 Gew.-% SnO₂, bevorzugt höchstens 0,06 Gew.-% SnO₂ enthält. Auf diese Weise kann der negative Einfluss des SnO₂ auf die optischen Eigenschaften der Glaskeramik weiter reduziert werden, während gleichzeitig eine verbesserte Läuterung des Grünglases durch den Gehalt an SnO₂ gewährleistet wird.

Dementsprechend ist nach einer weiteren Weiterbildung der Erfindung vorgesehen, dass die Glaskeramik frei von SnO₂ ist. Unter "frei von SnO₂" wird dabei verstanden, dass die Glaskeramik kein oder maximal 550 ppm, bevorzugt maximal 500 ppm, SnO₂ enthält.

Eine solche Läuterung, die vollständig ohne SnO₂ erfolgt und mithin den oben genannten Einfluss von SnO₂ auf die optischen Eigenschaften der Glaskeramik vermeidet, ist dabei besonders vorteilhaft zur Herstellung einer transparenten und farbneutralen Glaskeramik.

Die erfindungsgemäße Glaskeramik ist ferner frei von Cr₂O₃, V₂O₅, MnO₂ und MoO₃. V₂O₅ und MoO₃ werden üblicherweise als Hauptfärbemittel zur Färbung von volumengefärbten Glaskeramiken eingesetzt, während Cr₂O₃ und MnO₂ häufig zur unterstützenden Färbung eingesetzt werden. Die vorstehend genannten Färbemittel und insbesondere V₂O₅ färben in Glaskeramiken generell schon in geringen Mengen sehr intensiv, weswegen die Gehalte der vorstehend genannten Komponenten in der erfindungsgemäßen Glaskeramik so gering wie möglich gehalten werden sollten, um die erfindungsgemäße Buntheit der Glaskeramik zu gewährleisten. Dabei kommen diese Komponenten unter anderem als Verunreinigungen in Rohstoffen des Gemenges oder als Komponenten in Scherben vor, die dem Gemenge zur Verbesserung der Schmelzeigenschaften hinzugefügt werden.

Unter "frei von Cr₂O₃" wird dabei verstanden, dass die Glaskeramik kein oder maximal 6 ppm Cr₂O₃ enthält.

Unter "frei von V₂O₅" wird dabei verstanden, dass die Glaskeramik kein oder maximal 12 ppm V₂O₅ enthält.

Unter "frei von MnO₂" wird dabei verstanden, dass die Glaskeramik kein oder maximal 60 ppm MnO₂ enthält.

Unter "frei von MoO₃" wird dabei verstanden, dass die Glaskeramik kein oder maximal 12 ppm MoO₃ enthält.

Ferner ist bevorzugt, dass die Glaskeramik auch frei von Ce, Ni, Cu, Co und/oder W bzw. deren Oxiden ist.

Unter "frei von ..." wird dabei verstanden, dass diese Komponenten nicht oder in Summe mit maximal 220 ppm, bevorzugt maximal 200 ppm, vorhanden sind.

Ferner ist bevorzugt, dass die Glaskeramik auch frei von S bzw. seinen Oxiden ist. Unter "frei von S" wird dabei verstanden, dass S bzw. seine Oxide nicht oder mit maximal 240 ppm vorhanden sind.

Vorzugsweise weist die transparente Lithiumaluminiumsilikat-Glaskeramik einen Lichttransmissionsgrad τᵥᵢₛ von mehr als 80% bezogen auf eine Dicke von 4 mm auf.

Glaskeramiken mit einem Lichttransmissionsgrad von mehr als 80 % bezogen auf eine Dicke von 4 mm sind besonders dafür geeignet, als Kaminsichtscheibe oder als Kochplatte verwendet zu werden. In Kaminen bewirkt diese Transmission, dass das Feuer besonders gut sichtbar ist. In Kochgeräten ermöglicht diese Transmission beispielsweise, dass Leuchtanzeigen mit relativ geringer Leuchtdichte wie beispielsweise LCD- oder OLED-Anzeigen besonders gut sichtbar sind. Bevorzugt weist die erfindungsgemäße Glaskeramik dabei einen Lichttransmissionsgrad τᵥᵢₛ von mehr als 82 %, besonders bevorzugt mehr als 85 %, jeweils bezogen auf eine Dicke von 4 mm, auf.

Die vorstehende Transmissionsangabe der Glaskeramik, die sich auf eine Dicke von 4 mm bezieht, kann mittels des Lambert-Beer-Gesetzes auf andere Substratdicken umgerechnet werden. Der Lichttransmissionsgrad τᵥᵢₛ wird dabei im Wellenlängenbereich 380 - 780 nm unter Verwendung von Licht der Normlichtart D65 und einem 2°-Beobachter gemäß den Vorgaben von DIN 5033 bestimmt. Dieser Wert entspricht der Helligkeit Y im CIExyY-Farbraum.

Vorzugsweise enthält die Glaskeramik höchstens 0,1 Gew.-% (1000 ppm) Fe₂O₃, bevorzugt weniger als 0,06 Gew.-%, sehr bevorzugt weniger als 0,05 Gew.-% Fe₂O₃, besonders bevorzugt weniger als 0,04 Gew.-% oder weniger als 0,03 Gew.-%, ganz besonders bevorzugt nicht mehr als 0,02 Gew.-%. Ähnlich wie V₂O₅, Cr₂O₃, MnO₂ und MoO₃ wirkt auch Fe₂O₃ in der Glaskeramik färbend. Aus diesem Grund ist es für eine transparente Glaskeramik vorteilhaft, wenn der Gehalt an Fe₂O₃ auf die oben genannten Werte beschränkt ist. Der Eisenanteil braucht aber nicht aufwendigst minimiert zu werden. So sind vorzugsweise wenigstens 0,005 Gew.-% (50 ppm) Fe₂O₃ in der Glaskeramik vorhanden.

Es wird an dieser Stelle darauf hingewiesen, dass im Rahmen der vorliegenden Offenbarung die Komponenten des Glases in der Form angegeben werden, wie sie üblicherweise mittels Analyse erhalten werden. Dabei wird üblicherweise die Komponente in der stabilen, zumeist in der höchsten, Oxidationsstufe angegeben. Es wird allerdings darauf hingewiesen, dass dies nicht zwingend der Form entspricht, in welcher die Komponente auch tatsächlich vorliegt.

Beispielsweise kann das Eisen in einem oxidischen Glas sowohl zweiwertig als auch dreiwertig vorliegen, also als Fe²⁺ bzw. FeO oder als Fe³⁺ bzw. als Fe₂O₃. Die Angaben zu den Gehalten entsprechender Komponenten im Rahmen der vorliegenden Offenbarung beziehen sich also auf übliche Angaben der Analyse, wobei allerdings verstanden wird, dass die Komponente auch in von der "idealen", üblicherweise angegebenen Oxidationsstufe abweichender Form vorliegen kann.

Die transparente Lithiumaluminiumsilikat-Glaskeramik kann auch Nd₂O₃ enthalten. Wenn Nd₂O₃ vorhanden ist, sind Gehalte von 0,01 - 0,07 Gew.-% Nd₂O₃ oder 0,03 - 0,06 Gew.-% Nd₂O₃ bevorzugt. In Glaskeramiken mit einem Gehalt an Fe₂O₃ und TiO₂ in den zuvor beschriebenen Grenzen kann eine Zugabe von Nd₂O₃ dazu beitragen, einen durch Fe₂O₃ und TiO₂ verursachten Gelbstich zu reduzieren oder zu beheben, wobei der Lichttransmissionsgrad dabei nur geringfügig beeinflusst wird.

Die transparente Lithiumaluminiumsilikat-Glaskeramik kann auch MgO enthalten. Wenn MgO vorhanden ist, sind Gehalte von weniger als 1,5 Gew.-% MgO, vorzugsweise von weniger als 1,0 Gew.-%, bevorzugt weniger als 0,6 Gew.-%, besonders bevorzugt weniger als 0,5 Gew.-%, besonders bevorzugt höchstens 0,4 Gew.-% vorgesehen. MgO hat dabei einen positiven Einfluss auf die Schmelzbarkeit und das Entglasungsverhalten der Glaskeramik. Eine Begrenzung des Gehalts an MgO auf die zuvor genannten Grenzen kann dabei dazu beitragen, die thermische Ausdehnung der Glaskeramik zu optimieren und die Buntheit zu reduzieren.

Die transparente Lithiumaluminiumsilikat-Glaskeramik kann auch CaO enthalten. Wenn CaO vorhanden ist, sind Gehalte von höchstens 1,5 Gew.-% CaO, bevorzugt höchstens 1,2 Gew.-%, besonders bevorzugt höchstens 1 Gew.-% vorgesehen. CaO wirkt sich dabei vorteilhaft für das Entglasungsverhalten der Glaskeramik aus. Allerdings hat es sich für eine farblose, transparente Glaskeramik als vorteilhaft erwiesen, den Gehalt an CaO auf die vorstehenden Werte zu begrenzen, da CaO zu einer Vergrößerung der Kristallitgröße in der Glaskeramik beiträgt. Mit einer Vergrößerung der Kristallitgröße geht wiederum eine verstärkte Streuung und mithin schlechtere optische Eigenschaften der Glaskeramik einher.

Zuvor wurde bereits ausgeführt, dass ZnO zu einer verstärkten Streuung beitragen kann, da ein zu hoher Gehalt an ZnO zu einem erhöhten Brechwertunterschied zwischen Kristall- und Restglasphase in der Glaskeramik beiträgt. Um diesem Effekt entgegenzuwirken, enthält die Glaskeramik in bevorzugten Ausführungsformen bis zu 5 Gew.-% BaO, bevorzugt wenigstens 2,0 Gew.-% BaO, besonders bevorzugt wenigstens 2,5 Gew.-%, ganz besonders bevorzugt wenigstens 2,9 Gew.-%. Ein erhöhter Anteil an BaO reduziert die Tendenz der Glaskeramik zur Streuung von einfallendem Licht, da der Brechwert der Restglasphase bei gleichen Kristallitgrößen mit der Zugabe von BaO an den Brechwert der kristallinen Phase der Glaskeramik angeglichen werden kann. BaO bewirkt ferner, ähnlich wie Li₂O, eine Absenkung der Viskosität der Glasschmelze und somit eine Reduzierung des Verarbeitungspunktes. Um die Schmelzbarkeit des Grünglases zu verbessern, sind die geschilderten Mindestgehalte vorteilhaft. BaO trägt in der Glaskeramik auch maßgeblich zur Verbesserung des Entglasungsverhaltens bei der Heißformgebung des Grünglases bei. Es hat sich jedoch gezeigt, dass sich BaO negativ auf die Ausbildung der Kristallphase während der Keramisierung auswirken kann. Um zu verhindern, dass lange Keramisierungszeiten nötig werden, ist deshalb die Menge an BaO vorzugsweise auf maximal 5,0 Gew.-%, bevorzugt 4,5 Gew.-%, 4,0 Gew.-%, 3,9 Gew.-%, 3,8 Gew.-%, 3,7 Gew.-%, 3,6 Gew.-% oder sogar 3,5 Gew.-% beschränkt.

Die transparente Lithiumaluminiumsilikat-Glaskeramik kann auch SrO enthalten, wobei der Gehalt an SrO zugegeben werden kann, aber in den meisten Fällen aus Verunreinigungen der Rohstoffe zur Herstellung der Glaskeramik stammt. SrO trägt dabei unter anderem zur Streuung von Licht durch die Glaskeramik bei. Daher ist es vorteilhaft, falls SrO vorhanden ist, den Gehalt an SrO in der Glaskeramik gering zu halten, insbesondere ihn auf 0,8 Gew.-%, bevorzugt auf 0,75 Gew.-% zu beschränken. In einer bevorzugten Ausführungsform ist die Glaskeramik frei von SrO. Unter "frei von SrO" wird dabei verstanden, dass die Glaskeramik kein oder maximal 0,6 Gew.-%, bevorzugt maximal 0,5, besonders bevorzugt maximal 0,1 Gew.-% oder gar nur maximal 0,05 Gew.-%, SrO enthält.

Vorzugsweise ist die Summe aus CaO und BaO auf 2.0 bis 5,0 Gew.-%, bevorzugt auf höchstens 4,5 Gew.-% beschränkt.

Vorzugsweise ist die Summe aus MgO und CaO und BaO auf 2,5 bis 5,5 Gew.-%, bevorzugt auf 3 bis 4,5 Gew.-%, beschränkt.

Vorzugsweise ist die Summe aus MgO und ZnO auf 2,5 bis 4,5 Gew.-% beschränkt. Innerhalb dieser Grenzen der Summen der genannten zweiwertigen Oxide kann der thermische Ausdehnungskoeffizient der Glaskeramik sehr gezielt eingestellt werden.

Die transparente Lithiumaluminiumsilikat-Glaskeramik kann auch P₂O₅ enthalten, wobei der Gehalt an P₂O₅ zugegeben werden kann, aber in den meisten Fällen aus Verunreinigungen der Rohstoffe zur Herstellung der Glaskeramik stammt. P₂O₅ verändert dabei unter anderem die Viskosität der Schmelze und erhöht den Ausdehnungskoeffizienten der Glaskeramik. Daher ist es vorteilhaft, falls P₂O₅ vorhanden ist, den Gehalt an P₂O₅ in der Glaskeramik gering zu halten, insbesondere ihn auf 1,5 Gew.-%, bevorzugt 0,5 Gew.-%, besonders bevorzugt auf 0,2 Gew.-% oder nur 0,15 Gew.-% zu beschränken. In einer bevorzugten Ausführungsform ist die Glaskeramik frei von P₂O₅. Unter "frei von P₂O₅" wird dabei verstanden, dass die Glaskeramik kein oder maximal 1200 ppm P₂O₅ enthält.

In einer bevorzugten Ausführungsform enthält die Glaskeramik die nachfolgenden Bestandteile in Gew.-% auf Oxidbasis:

| | |
|---|---|
| SiO₂ | 62 - 70 |
| Al₂O₃ | 19 - 24 |
| Li₂O | 2,0 - 2,8 |
| Na₂O | 0 - 1 |
| K₂O | 0 - 0,3 |
| ZnO | 0 - 5 |
| MgO | 0 - < 0,6 |
| CaO | 0 - 1,5 |
| BaO | 2,0 - 4,5 |
| P₂O₅ | 0 - 0,2 |
| TiO₂ | 1,5 - 2,5 |
| ZrO₂ | > 1,6 - 2,0 |
| As₂O₃ | 0,5 - 0,82 |

Vorzugsweise ist die Glaskeramik und bevorzugt diese bevorzugte Glaskeramik nicht nur frei von Cr₂O₃, V₂O₅, MnO₂, MoOs, sondern auch von Sb₂O₃ und SnO₂.

Vorzugsweise ist die Glaskeramik und bevorzugt diese bevorzugte Glaskeramik sowohl frei von SrO als auch von P₂O₃.

Die Läuterung von Grüngläsern auf Grundlage der vorstehend genannten Zusammensetzungen kann sowohl mittels einer Kombination aus SnO₂ mit As₂O₃ und/oder Sb₂O₃ oder, wie bevorzugt, nur mittels As₂O₃ und/oder Sb₂O₃, also in Abwesenheit von SnO₂, dabei besonders bevorzugt nur mit As₂O₃, also auch in Abwesenheit von Sb₂O₃, erfolgen.

Verwendung findet die erfindungsgemäße Glaskeramik als Kaminsichtscheibe, Abdeckung von Brennelementen in Gasgrills, Backofensichtscheibe, insbesondere für Pyrolyseherde, Kochfläche, Grill- oder Bratfläche, Arbeits- oder Tischplatten in Küchen oder Laboren, Abdeckung für Beleuchtungsvorrichtungen, in Brandschutzverglasungen und als Sicherheitsglas, optional im Laminatverbund, als Trägerplatte oder als Ofenauskleidung in thermischen Prozessen oder als rückseitige Abdeckung für mobile elektronische Geräte.

Die erfindungsgemäße Glaskeramik kann insbesondere als Sichtscheibe insbesondere eines Kaminofens eingesetzt werden, denn für Kaminsichtscheiben ist eine gute und farbneutrale Durchsicht auf den Brennraum und die Flammen gewünscht. Die Kaminsichtscheibe kann an der Ober- und/oder Unterseite bzw. in der Einbausituation an der Außen- und/oder Innenseite ganz oder teilweise mit einer funktionellen Beschichtung oder einem Dekor versehen sein. Ein solches Dekor kann beispielsweise rahmenförmig angeordnet sein und zur Abdeckung von Funktionselementen wie Scharnieren dienen.

Die erfindungsgemäße Glaskeramik kann insbesondere als Kochfläche eingesetzt werden. Die Kochfläche kann dabei an der Oberseite und/oder der Unterseite ganz oder teilweise mit einem Dekor oder einer funktionellen Beschichtung versehen sein. Ebenso können auf der Unterseite Berührungssensoren zur Bedienung der Kochfläche vorgesehen sein. Dies können beispielsweise aufgedruckte, aufgeklebte oder angedrückte kapazitive Sensoren sein.

Im Folgenden wird die Erfindung anhand von Beispielen weiter veranschaulicht.

Die kristallisierbaren Grüngläser der Ausführungsbeispiele wurden aus in der Glasindustrie üblichen technischen Gemengerohstoffen bei Temperaturen von 1680 °C, 4 Stunden eingeschmolzen. Mit der Wahl solcher Rohstoffe lassen sich die Forderungen nach wirtschaftlichen Rohstoffen und einem geringen Verunreinigungsgehalt an unerwünschten Verunreinigungen vereinbaren. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1640 °C, 60 Minuten durch Rühren homogenisiert. Nach dieser Homogenisierung wurden die Gläser für 3 bis 3,5 Stunden bei 1680 °C geläutert. Anschließend wurden Blöcke von ca. 120 × 120 × 30 mm³ Größe gegossen und in einem Kühlofen beginnend, abhängig von der jeweiligen Viskosität des Glases, ab 650 - 670 °C mit 30 K/h auf Raumtemperatur abgekühlt, um Spannungen abzubauen. Die Gussstücke wurden in die für die Untersuchungen und für die Keramisierung benötigten Größen unterteilt. Die Keramisierung der Proben im Grünglaszustand erfolgte mit einem Keramisierungsverfahren mit den folgenden Schritten:
a) Aufheizen von Raumtemperatur auf 680 °C bis 760 °C innerhalb von 3 bis 60 Minuten,
b) Temperaturerhöhung des kristallisierbaren Grünglases auf den Temperaturbereich der Keimbildung Tₐ bis 800 °C über einen Zeitraum von 10 bis 100 Minuten,
c) Temperaturerhöhung des Kristallisationskeime enthaltenden Glases innerhalb von 5 bis 80 Minuten in den Temperaturbereich hoher Kristallwachstumsgeschwindigkeit von 810 °C bis 930 °C,
d) Halten der Temperatur bei 810 bis 930 °C für 2 bis 60 min.,
e) Abkühlen auf Raumtemperatur innerhalb weniger als 150 Minuten.

Die nachfolgenden Tabellen enthalten in Tabelle 1 die Zusammensetzung und in Tabelle 2 Materialeigenschaften der erfindungsgemäßen Beispiele (A1 bis A7) und eines Vergleichsbeispiels (V1).

Bei den Zusammensetzungen sind Komponenten, die nur als Verunreinigung enthalten sind, nicht aufgeführt oder mit einem Gehalt von "-" angegeben. Daher ergibt die Summe der angegebenen Komponenten ggf. nicht 100 %.

Die Begriffe "erfindungsgemäßes Beispiel" und "Ausführungsbeispiel" werden synonym verwendet.

Das Vergleichsbeispiel entspricht Beispiel Nr. 10 / Nr. 20 aus Glas Nr. 10 aus EP 1 837 312 A1. Es stellt auch in diesem Patentdokument ein Vergleichsbeispiel dar. Die Angaben zu ihm sind aus dem Dokument übernommen. Die Angaben zu den Ausführungsbeispielen wurden folgendermaßen erhalten:
Der thermische Ausdehnungskoeffizient CTE wurde mittels eines Verfahrens ermittelt, das sich im Wesentlichen an der DIN ISO 7991 von 1998 orientiert.

T_{g} [°C] gibt die Transformationstemperatur, auch als Glasübergangstemperatur bekannt, der Grüngläser an. Sie wurde dilatometrisch bestimmt.

Der Verarbeitungspunkt V_{A} oder T4 [°C], also die Temperatur bei einer Viskosität von 10⁴ dPas der Grüngläser wurde mit einem Rührviskosimeter gemäß DIN ISO 7884-2 bestimmt.

Zur Messung der oberen Entglasungstemperatur OEG [°C] wurden die Grüngläser in Pt/Rh10-Tiegeln geschmolzen. Anschließend wurden die Tiegel für 5 Stunden bei verschiedenen Temperaturen im Bereich der Verarbeitungstemperatur gehalten. Die oberste Temperatur, bei der die ersten Kristalle an der Kontaktfläche der Glasschmelze zur Tiegelwand auftreten, bestimmt die OEG.

In der Tabelle 2 ist auch die Differenz T4 - OEG [K] angegeben. Sie ist ein Maß für die Entglasungsfestigkeit des Glases.

Der Lichttransmissionsgrad τᵥᵢₛ wurde im Wellenlängenbereich 380 - 780 nm unter Verwendung von Licht der Normlichtart D65 und einem 2°-Beobachter gemäß den Vorgaben von DIN 5033 bestimmt. Dieser Wert entspricht der Helligkeit Y im CIExyY-Farbraum. Der Wert ist ein Maß für das Helligkeitsempfinden des menschlichen Auges.

Die Farbkoordinaten L*, a*, b* im CIExyY-Farbraum und im CIELab-Farbraum wurden gemäß den Vorgaben der CIE 1932 mit einem 2°-Beobachter und Licht der Normlichtart D65 in Transmission bestimmt. Aus a* und b* wurde C* berechnet.

Auch der Yellowness-Index YI ist angegeben. Er wurde bestimmt nach Norm ASTM 1925/70 (77, 85) und ist dimensionslos. Wie die Buntheit C* ist er ein Maß für die Eigenfarbe.

Alle Transmissionsmessungen wurden an 4 mm dicken, beidseitig glatten Proben durchgeführt.

Der Volumenanteil "HQMK Phasengehalt" und die Kristallitgröße der kristallinen Phase "HQMK Kristallitgröße" wurden mittels Rietveld-Analyse aus Röntgenbeugungsspektren bestimmt. Die Angabe Vol.-% bezieht sich dabei auf das Volumen der Glaskeramik.

**Tabelle 1: Zusammensetzungen beispielhafter Glaskeramiken in Gew.-% auf Oxidbasis (A1 bis A7 als Ausführungsbeispiele und V1 als Vergleichsbeispiel)**

| Beispiel-Nr. | A1 | A2 | A3 | A4 | A5 | A6 | A7 | V1 |
|---|---|---|---|---|---|---|---|---|
| SiO₂ | 63,8 | 63,9 | 64,5 | 64,6 | 65,0 | 65,3 | 64,7 | 62,0 |
| Al₂O₃ | 21,2 | 21,0 | 20,5 | 20,3 | 20,3 | 20,2 | 19,8 | 21,3 |
| Li₂O | 2,7 | 2,8 | 2,4 | 2,5 | 2,2 | 2,0 | 2,5 | 2,7 |
| Na₂O | 0,31 | 0,32 | 0,33 | 0,33 | 0,33 | 0,33 | 0,33 | -- |
| K₂O | 0,23 | 0,22 | 0,23 | 0,22 | 0,23 | 0,23 | 0,23 | -- |
| MgO | 0,39 | 0,37 | 0,37 | 0,37 | 0,37 | 0,37 | 0,27 | 1,0 |
| CaO | 0,74 | 0,74 | 0,74 | 0,89 | 0,93 | 1,1 | 0,88 | 0,5 |
| BaO | 3,0 | 3,1 | 3,1 | 3,0 | 2,5 | 2,2 | 3,0 | 1,3 |
| ZnO | 2,6 | 2,6 | 3,0 | 2,8 | 3,2 | 3,4 | 3,3 | 6,0 |
| TiO₂ | 2,2 | 2,2 | 2,2 | 2,2 | 2,2 | 2,2 | 2,2 | 1,8 |
| ZrO₂ | 1,8 | 1,9 | 1,8 | 1,8 | 1,8 | 1,8 | 1,8 | 2,0 |
| P₂O₅ | -- | -- | -- | -- | -- | -- | -- | 0,7 |
| As₂O₃ | 0,78 | 0,80 | 0,76 | 0,76 | 0,74 | 0,74 | 0,81 | 0,7 |
| SnO₂ | -- | -- | -- | -- | -- | -- | 0,057 | -- |
| Fe₂O₃ | 0,045 | 0,020 | 0,014 | 0,015 | 0,014 | 0,014 | 0,015 | 0,010 |
| Nd₂O₃ | 0,050 | 0,055 | 0,051 | 0,052 | 0,056 | 0,054 | 0,045 | 0,15 |

**Tabelle 2: Materialeigenschaften der beispielhaften Glaskeramiken bzw. ihrer Grüngläser (A1 bis A7 als Ausführungsbeispiele und V1 als Vergleichsbeispiel)**

| Beispiel-Nr. | A1 | A2 | A3 | A4 | A5 | A6 | A7 | V1 |
|---|---|---|---|---|---|---|---|---|
| Tg (°C) | 683 | 689 | 696 | 691 | 691 | 696 | 679 | 673 |
| T4 [°C] | 1311 | n.b. | 1318 | 1318 | n.b. | n.b. | n.b. | 1281 |
| OEG [°C] | 1270 | 1290 | 1305 | 1290 | 1330 | 1355 | n.b. | 1340 |
| T4 - OEG [K] | 41 | | 13 | 28 | | | | (-59) |
| HQMK Phasengehalt [%] | 61 | 56 | 57 | 57 | 56 | 56 | 58 | 71 |
| HQMK Kristallitgröße [nm] | 50 | 45 | 43 | 45 | 41 | 40 | 48 | 73 |
| CTE(20;700°C) [ppm/K] | 0,35 | 0,33 | 0,42 | 0,41 | 0,48 | 0,61 | 0,26 | -0,07 / n.a. |
| Y [%] | 86,1 | 86,9 | 87,5 | 87,6 | 87,5 | 87,4 | 87,1 | 72,2 / 69,9 |
| YI | 7,1 | 4,5 | 4,3 | 4,0 | 3,7 | 3,9 | 5,4 | 25,0 / 26,0 |
| L* | 94,4 | 94,7 | 94,9 | 95,0 | 94,9 | 94,9 | 94,8 | 87,7 / 86,6 |
| a* | -0,5 | -0,3 | -0,4 | -0,3 | -0,3 | -0,3 | -0,4 | -1,2 / -1,3 |
| b* | 3,9 | 2,5 | 2,4 | 2,2 | 2,1 | 2,2 | 3,0 | 13,4 / 13,7 |
| C* | 4,0 | 2,5 | 2,4 | 2,3 | 2,1 | 2,2 | 3,0 | 13,6 / 13,8 |

| | | | | | | | | |
|---|---|---|---|---|---|---|---|---|
| n.b. = nicht bestimmt n.a. = nicht angegeben | | | | | | | | |

Die Ausführungsbeispiele zeigen mit ihren C*-Werten, dass die Glaskeramiken eine sehr gute Farbneutralität aufweisen. Es ist besonders wertvoll, dass diese C*-Werte mit den angegebenen niedrigen Li₂O-Gehalten erzielt werden konnten.

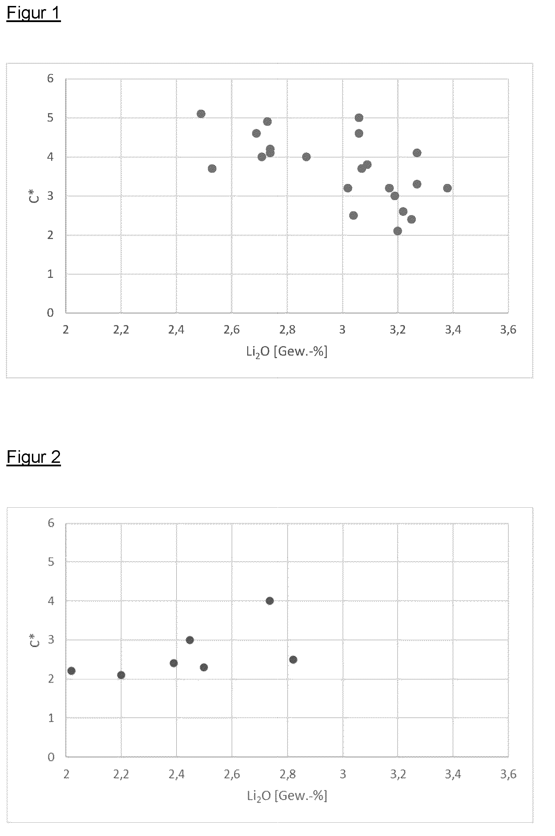

Dass dies nicht zu erwarten war, verdeutlicht Figur 1 mit der Darstellung von C* gegen den Li₂O-Gehalt (in Gew.-%) der Beispiele aus EP 4 495 076 A1, die eine Korrelation zwischen sinkendem Li₂O-Gehalt und steigendem C* zeigt.

Dagegen weisen die Glaskeramiken der vorliegenden Erfindung eine Korrelation derart auf, dass mit sinkendem Li₂O-Gehalt der C*-Wert sinkt, wie Figur 2 mit der Darstellung von C* gegen den Li₂O-Gehalt (in Gew.-%) der Ausführungsbeispiele zeigt.

Auch Vergleichsbeispiel V1, das Vergleichsbeispiel aus EP 1 837 312 A1, mit einem Gehalt an Li₂O von 2,7 Gew.-% und an As₂O₃ von 0,7 Gew.-% und einem C*-Wert von über 13 ließ nicht erwarten, im erfindungsgemäßen Zusammensetzungsbereich Glaskeramiken mit hoher Farbneutralität zu erhalten. Schließlich lehrt EP 1 837 312 A1 (s. auch ihre Ausführungsbeispiele), dass für Glaskeramiken mit niedrigeren C*-Werten höhere Anteile der teuren Komponente Li₂O benötigt werden.

Es ist weiterhin bemerkenswert, dass sich im erfindungsgemäßen Zusammensetzungsbereich die niedrigen Li₂O-Gehalte nicht nachteilig auf die Herstellbarkeit des zu kristallisierenden Glases auswirken, wie die positiven Werte der Differenz T4 - OEG der Ausführungsbeispiele zeigen.

Das kristallisierbare Glas verfügt damit bei der Formgebung aus der Schmelze über eine ausreichende Entglasungsfestigkeit. Bei der Formgebung im Kontakt mit dem Formgebungsmaterial (z. B. Edelmetall bei der Ziehdüse im Walzprozess) bilden sich im Glas keine für die Festigkeit der Glaskeramik kritischen und visuell auffälligen Kristalle. Die OEG liegt vorzugsweise mindestens 10 K unter T4. Bei dieser Mindestdifferenz wird für den Formgebungsprozess ein ausreichend großes Prozessfenster definiert. Besonders vorteilhaft ist ein Prozessfenster T4 - OEG von mindestens 20 K.

## Patentansprüche

1. Transparente Lithiumaluminiumsilikat-Glaskeramik
mit einer Hochquarz-Mischkristallphase,
mit einem thermischen Ausdehnungskoeffizienten im Bereich von 20 °C bis700 °C von -0,8 bis 1,5 ppm/K,
mit einer Buntheit C* von weniger als 5 bezogen auf eine Dicke von 4 mm,
mit einer Zusammensetzung enthaltend in Gew.-% auf Oxidbasis:
| | |
|---|---|
| SiO₂ | 62 - 70 |
| Al₂O₃ | 19 - 24 |
| Li₂O | 1,9 - < 3,0 |
| Na₂O | 0 - 1 |
| K₂O | 0 - 1 |
| ZnO | 0 - 5 |
| MgO | 0 - < 1,5 |
| CaO | 0 - 1,5 |
| BaO | 0 - 5 |
| TiO₂ | 1,5 - 3,5 |
| ZrO₂ | 1,0 - 2,5 |
| SnO₂ | 0 - 0,15 |
| As₂O₃ und/oder Sb₂O₃ | 0,1 - 1,5 |
und wobei die Glaskeramik frei von Cr₂O₃, V₂O₅, MnO₂ und MoO₃ ist.

2. Transparente Lithiumaluminiumsilikat-Glaskeramik nach Anspruch 1, **dadurch gekennzeichnet, dass** die transparente Lithiumaluminiumsilikat-Glaskeramik einen Lichttransmissionsgrad τᵥᵢₛ von mehr als 80 %, bevorzugt von mehr als 82 %, besonders bevorzugt von mehr als 85 %, jeweils bezogen auf eine Dicke von 4 mm aufweist.

3. Transparente Lithiumaluminiumsilikat-Glaskeramik nach Anspruch 1 oder 2, **dadurch gekennzeichnet, dass** die transparente Lithiumaluminiumsilikat-Glaskeramik eine Buntheit C* von weniger als 4,5, bevorzugt von weniger als 4,2, besonders bevorzugt von höchstens 3,5, ganz besonders bevorzugt von weniger als 3,2, jeweils bezogen auf eine Dicke von 4 mm aufweist.

4. Transparente Lithiumaluminiumsilikat-Glaskeramik nach einem der Ansprüche 1 bis 3, **dadurch gekennzeichnet, dass** die transparente Lithiumaluminiumsilikat-Glaskeramik eine Kristallitgröße in der Hochquarz-Mischkristallphase von weniger als 80 nm, bevorzugt von weniger als 70 nm, besonders bevorzugt von weniger als 60 nm, ganz besonders bevorzugt von weniger als 50 nm aufweist.

5. Transparente Lithiumaluminiumsilikat-Glaskeramik nach einem der Ansprüche 1 bis 4, **dadurch gekennzeichnet, dass** die Hochquarz-Mischkristallphase die Hauptkristallphase ist.

6. Transparente Lithiumaluminiumsilikat-Glaskeramik nach einem der Ansprüche 1 bis 5, **dadurch gekennzeichnet, dass** die transparente Lithiumaluminiumsilikat-Glaskeramik frei von SnO₂ ist.

7. Transparente Lithiumaluminiumsilikat-Glaskeramik nach einem der Ansprüche 1 bis 6, **dadurch gekennzeichnet, dass** die transparente Lithiumaluminiumsilikat-Glaskeramik 0,5 Gew.-% bis 0,82 Gew.-% As₂O₃ enthält.

8. Transparente Lithiumaluminiumsilikat-Glaskeramik nach einem der Ansprüche 1 bis 7, **dadurch gekennzeichnet, dass** die transparente Lithiumaluminiumsilikat-Glaskeramik 0 - 0,8 Gew.-% SrO und/oder 0 - 1,5 Gew.-% P₂O₅, bevorzugt bis 0,5 Gew.-%, P₂O₅ enthält.

9. Transparente Lithiumaluminiumsilikat-Glaskeramik nach einem der Ansprüche 1 bis 8, **gekennzeichnet durch** eine Zusammensetzung enthaltend in Gew.-% auf Oxidbasis:
| | |
|---|---|
| SiO₂ | 62 - 70 |
| Al₂O₃ | 19 - 24 |
| Li₂O | 2,0 - 2,8 |
| | |
|---|---|
| Na₂O | 0 - 1 |
| K₂O | 0 - 0,3 |
| ZnO | 0 - 5 |
| MgO | 0 - < 0,6 |
| CaO | 0 - 1,5 |
| BaO | 2,0 - 4,5 |
| P₂O₅ | 0 - 0,2 |
| TiO₂ | 1,5 - 2,5 |
| ZrO₂ | > 1,6 - 2,0 |
| As₂O₃ | 0,5 - 0,82 |
und wobei die Glaskeramik frei von Cr₂O₃, V₂O₅, MnO₂, MoOs, Sb₂O₃ und SnO₂ ist.

10. Transparente Lithiumaluminiumsilikat-Glaskeramik nach einem der Ansprüche 1 bis 9, **dadurch gekennzeichnet, dass** die transparente Lithiumaluminiumsilikat-Glaskeramik 0,005 Gew.-% bis 0,1 Gew.-% Fe₂O₃, bevorzugt weniger als 0,06 Gew.-% Fe₂O₃, besonders bevorzugt weniger als 0,05 Gew.-% Fe₂O₃ enthält.

11. Verwendung einer Glaskeramik nach einem der Ansprüche 1 bis 10 als Kaminsichtscheibe, Abdeckung von Brennelementen in Gasgrills, Backofensichtscheibe, insbesondere für Pyrolyseherde, Kochfläche, Grill- oder Bratfläche, Arbeits- oder Tischplatten in Küchen oder Laboren, Abdeckung für Beleuchtungsvorrichtungen, in Brandschutzverglasungen und als Sicherheitsglas, optional im Laminatverbund, als Trägerplatte oder als Ofenauskleidung in thermischen Prozessen oder als rückseitige Abdeckung für mobile elektronische Geräte.
